# EUROPEAN PATENT APPLICATION

(11) **EP 2 362 335 A1**
(43) Date of publication of application: **31.08.2011**
(21) Application number: 10154785.9
(22) Date of filing: 26.02.2010
(51) Int. Cl.: G06Q 30/00, G06Q 10/00

(54) **A method and system for operating a cooking appliance**

(71) Applicant: RESEARCH IN MOTION LIMITED, Waterloo, Ontario N2L 3W8 (CA)
(72) Inventor: Ierullo, Salvatore, Mississauga Ontario L4W 5P1 (CA)
(74) Representative: Patel, Binesh

(57) **Abstract**

A method and system guides the preparation of a dish according to a recipe and using a communication device to configure the operation of a cooking appliance. The recipe is presented to direct the preparation of a dish in recipe steps; a cooking appliance in communication with the communication device is configured according to the steps; progress of the recipe steps is monitored; and one or more advertisements are presented in response to the progress. Monitoring may comprises receiving input indicating the progress and presenting one or more advertisements may be responsive to the input. The input may comprise cooking appliance data received from the cooking appliance. An advertisement may be contextually selected for presentation in response to recipe data associated with the recipe. It may be presented interactively to invoke a communication function of the device, for example to conduct an e-commerce or other transaction.

## Description

### Field

The present disclosure relates generally to personal communication devices and more particularly to a method and system to assist a cook.

### Background

Communication devices, particularly wireless communication devices are useful to receive, store and present content (e.g. information in one or more files) to users of such devices. Communication devices may be configured via one or more applications to communicate with other devices, assist a user to complete a particular task, and engage in e-commerce transactions.

### Brief Description of the Drawings

The disclosure will now be described by way of example only with reference to the following drawings in which:

**FIG. 1** is a block diagram illustrating a wireless communication device, in accordance with one embodiment, suitable for communicating, receiving and presenting content and assisting a user thereof to operate a cooking appliance;

**FIG. 2** is a block diagram of a communication system suitable for providing the operating environment of the device of FIG. 1 in accordance with one embodiment;

**FIG. 3** illustrates selected modules of a memory of a wireless device of FIG. 1 in accordance with one embodiment;

**FIGS. 4****,** **5A, 5B, 5C****,** **6A and 6B** are flow charts showing operations to operate a cooking appliance.

### Detailed Description

A sous chef method and system guides the preparation of a dish according to a recipe and using a communication device to operate a cooking appliance. The recipe is presented to direct the preparation of a dish in recipe steps; a cooking appliance in communication with the communication device is configured according to the steps; progress of the recipe steps is monitored; and one or more advertisements are presented in response to the progress. Monitoring may comprises receiving input indicating the progress and presenting one or more advertisements may be responsive to the input. The input may comprise cooking appliance data received from the cooking appliance. An advertisement may be contextually selected for presentation in response to recipe data associated with the recipe. It may be presented interactively to invoke a communication function of the device, for example to conduct an e-commerce or other transaction.

In accordance with one aspect there is provided a computer implemented method for operating a cooking appliance to prepare a dish in accordance with a recipe, the method performed by a communication device. The method comprises: presenting a recipe directing the preparation of a dish in recipe steps; configuring an operation of the cooking appliance in communication with the communication device in accordance with at least one of the recipe steps; monitoring a progress of the recipe steps; and presenting one or more advertisements in response to the progress.

In accordance with another aspect, there is provided a communication device comprising a processor and a memory coupled thereto and a communication sub-system, coupled to the processor, for communicating with and a cooking appliance for controlling the operation of the appliance and a content server to receive content such as recipes and/or advertisements (e.g. content packages), the memory storing instructions and data for execution by the processor to configure the communication device to perform the method aspect. Similarly, in another aspect there is provided a computer program product comprising a memory storing instructions and data to configure a processor of a communication device to perform such a method. The device may be a wireless communication device and such may communicate with a cooking appliance to monitor the progress. In another embodiment, the device is a cooking appliance such as a smart appliance configured to perform the method without need for a wireless communication device.

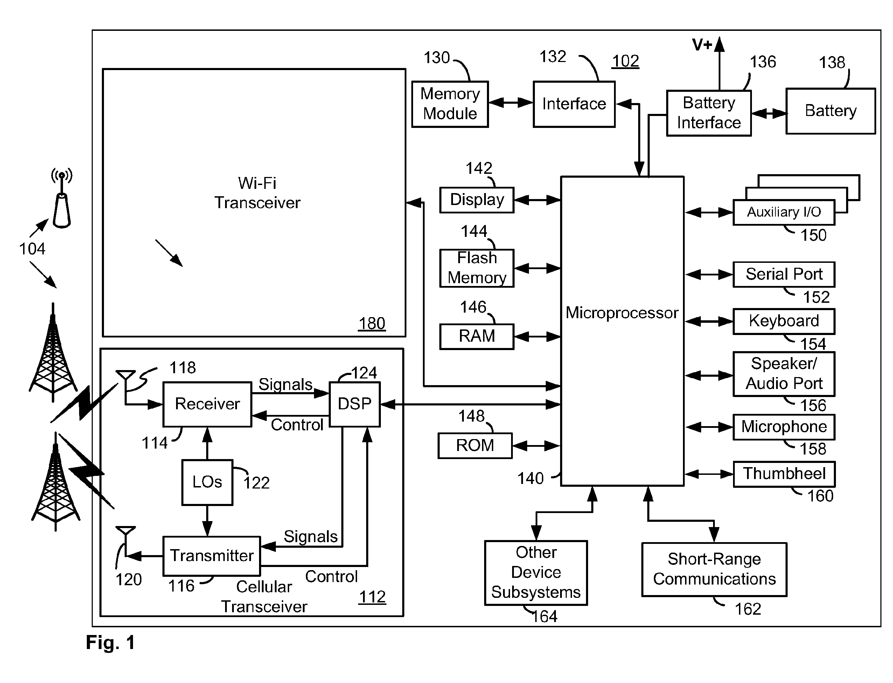

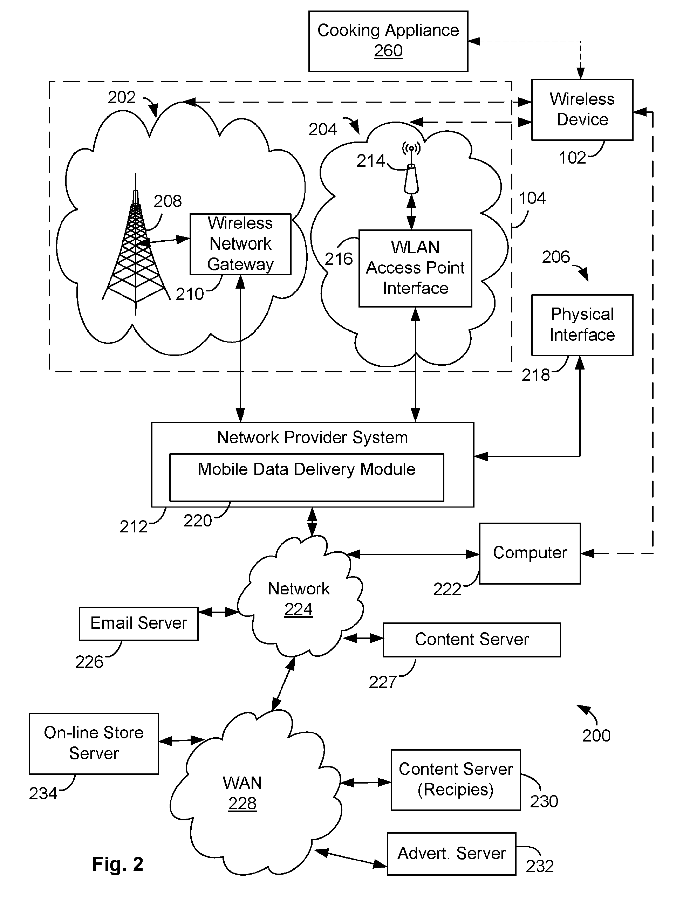

Reference is first made to FIG. 1, which shows a block diagram illustrating a portable wireless device 102 that is suitable for communicating for, receiving and presenting content in accordance with one aspect of the present disclosure. The wireless device 102 communicates through a wireless communication network 104. The wireless network 104 includes antenna, base stations, and supporting radio equipment as for supporting wireless communications between the wireless device 102 and other devices connected to wireless network 104. The wireless network 104 may be coupled to a wireless network gateway and to a wide area network, shown in FIG. 2.

In one embodiment, the wireless device 102 is a two-way communication device having at least data and/or voice communication capabilities, including the capability to communicate with other computer systems. In one embodiment, the wireless device 102 is a handheld device. Depending on the functionality provided by the wireless device 102, it may be referred to as a data messaging device, a two-way pager, a cellular telephone with data messaging capabilities, a wireless Internet appliance, a data communication device (with or without telephony capabilities), a smart phone, personal digital assistant, or a portable media or music player. The wireless device 102 may communicate with any one of a plurality of fixed transceiver stations within its geographic coverage area.

The wireless device 102 may incorporate a one or more communication subsystems 112, 180. Communication subsystem 112 comprises a receiver 114, a transmitter 116, and associated components, such as one or more antenna elements 118 and 120, local oscillators (LOs) 122, and a processing module such as a digital signal processor (DSP) 124. In one embodiment, the antenna elements 118 and 120 may be embedded or internal to the wireless device 102. As will be apparent to those skilled in the field of communications, the particular design of the communication subsystem 112 depends on the wireless network 104 in which the wireless device 102 is intended to operate.

The wireless device 102 may send and receive communication signals over the wireless network 104 after the required network registration or activation procedures have been completed. Signals received by the antenna 118 through the wireless network 104 are input to the receiver 114, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 124. In a similar manner, signals to be transmitted are processed, including modulation and encoding, for example, by the DSP 124. These DSP-processed signals are input to the transmitter 116 for digital-to-analog (D/A) conversion, frequency up conversion, filtering, amplification, and transmission to the wireless network 104 via the antenna 120. The DSP 124 not only processes communication signals, but also provides for receiver and transmitter control. For example, the gains applied to communication signals in the receiver 114 and the transmitter 116 may be adaptively controlled through automatic gain control algorithms implemented in the DSP 124.

Network access (WAN) may be associated with a subscriber or user of the wireless device 102 via a memory module, such as a memory module 130, which may be a Subscriber Identity Module (SIM) card for use in a GSM network or a USIM card for use in a UMTS. The SIM card is inserted in or connected to an interface 132 of the wireless device 102 in order to operate in conjunction with the wireless network 104. Alternatively, the wireless device 102 may have an integrated identity module for use with systems such as Code Division Multiple Access (CDMA) systems. Device 102 may include a Wi-Fi transceiver 180 that may comprise similar components/chipsets to subsystem 211 adapted for one or more Wi-Fi protocols. Though Wi-Fi is shown, WiMAX is one alternative transceiver. In some embodiments, device 102 may be capable of both Wi-Fi and WiMAX communications in accordance with software-defined radio ("cognizant radio") techniques.

The wireless device 102 also includes a battery interface 136 for receiving one or more rechargeable batteries 138. The battery 138 provides electrical power to at least some of the electrical circuitry in the wireless device 102, and the battery interface 136 provides a mechanical and electrical connection for the battery 138. The battery interface 136 is coupled to a regulator (not shown) which provides power V+ to the circuitry of the wireless device 102.

The wireless device 102 includes a microprocessor 140 which controls the overall operation of the wireless device 102. Communication functions, including at least data and voice communications, are performed through the communication subsystem 112. The microprocessor 140 also interacts with additional device subsystems such as a display 142, a flash memory 144, a random access memory (RAM) 146, a read-only memory (ROM) 148, auxiliary input/output (I/O) subsystems 150, a Universal Serial Bus (USB) port 152, a keyboard or keypad 154, a speaker or audio port 156 for connecting to, for example a set of headphones, a microphone 158, a clickable thumbwheel, trackball, or set of scroll buttons 160, a short-range communications subsystem 162, and any other device subsystems generally designated as 164. Some of the subsystems shown in FIG. 1 perform communication-related functions, whereas other subsystems may provide "resident" or on-device functions. Notably, some subsystems, such as the keypad 154, the display 142, and the clickable thumbwheel 160, for example, may be used for both communication-related functions, such as entering a text message for transmission over the wireless network 104, and executing device-resident functions such as a calculator or task list. Operating system software used by the microprocessor 140 is preferably stored in a persistent store such as the flash memory 144, which may alternatively be the ROM 148 or similar storage element. Those skilled in the art will appreciate that the operating system, specific device applications, or parts thereof, may be temporarily loaded into a volatile store such as the RAM 146.

The microprocessor 140, in addition to its operating system functions, enables execution of software applications on the wireless device 102. A predetermined set of applications that control basic device operations, including data and voice communication applications, will normally be installed on the wireless device 102 during or after manufacture. The wireless device 102 may include a personal information manager (PIM) application having the ability to organize and manage data items relating to a user such as, but not limited to, instant messaging, email, calendar events, voice mails, appointments, and task items. One or more memory stores may be available on the wireless device 102 to facilitate storage of information, such as the flash memory 144, the RAM 146, the ROM 148, the memory module 130, or other types of memory storage devices or FLASH memory cards represented by the other device subsystems 164, such as Secure Digital (SD) cards, mini SD cards, micro SD cards, etc.

The PIM and/or media applications have the ability to send and receive data items via either the wireless network 104 or a link to a computer system. The link to the computer system may be via the serial port 152 or the short-range communications subsystem 162. Additional applications may also be loaded onto the wireless device 102 through the wireless network 104, the auxiliary I/O subsystem 150, the serial port 152, the short-range communications subsystem 162, or any other suitable subsystem 164, and installed by a user in the RAM 146 or a nonvolatile store such as the ROM 148 for execution by the microprocessor 140. Such flexibility in application installation increases the functionality of the wireless device 102 and may provide enhanced on-device functions, communication-related functions, or both. For example, secure communication applications may enable electronic commerce functions and other such financial transactions to be performed using the wireless device 102.

In a data communication mode, a received data signal representing information such as a text message, an email message, a media file to be transferred, or Web page download will be processed by the communication subsystem 112 and input to the microprocessor 140. The microprocessor 140 will further process the signal for output to the display 142 or alternatively to the auxiliary I/O device 150. A user of the wireless device 102 may also compose data items, such as email messages, for example, using the keypad 154 and/or the clickable thumbwheel 160 in conjunction with the display 142 and possibly the auxiliary I/O device 150. The keypad 154 may be either a complete alphanumeric keypad or telephone-type keypad.

For voice communications, the overall operation of the wireless device 102 is similar, except that the received signals would be output to the speaker or audio port 156 and signals for transmission would be generated by a transducer such as the microphone 158. Alternative voice or audio I/O subsystems, such as a voice message recording subsystem, may also be implemented on the wireless device 102. Although voice or audio signal output is typically accomplished primarily through the speaker or audio port 156, the display 142 may also be used to provide an indication of the identity of a calling party, duration of a voice call, or other voice call related information. Stereo headphones may also be used in place of the speaker 156.

The serial port 152 is normally implemented in a personal digital assistant (PDA) type communication device for which synchronization with a user's computer is a desirable, albeit optional, component. The serial port 152 enables a user to set preferences through an external device or software application and extends the capabilities of the wireless device 102 by providing for information, media file, or software downloads to the wireless device 102 other than through the wireless network 104.

The short-range communications subsystem 162 is an additional optional component which provides for communication between the wireless device 102 and different systems or devices, which need not necessarily be similar devices. For example, the subsystem 162 may include an infrared device and associated circuits and components, or a wireless bus protocol compliant communication mechanism such as a Bluetooth^{™} communication module to provide for communication with similarly-enabled systems and devices (Bluetooth^{™} is a registered trademark of Bluetooth SIG, Inc.). In another embodiment, the short-range communications subsystem 162 may be a wireless networking communications subsystem, conforming to IEEE 802.11 standards such as 802.11b, 802.11g, and/or 802.11n.

Reference is next made to FIG. 2, which shows a communication system 200 suitable for use with the wireless device 102 shown in FIG. 1. The communication system 200 generally includes one or more wireless devices 102 (only one of which is shown in FIG. 2) and the wireless network 104. The wireless network 104 may include a wireless Wide Area Network (WAN) 202, a Wireless Local Area Network (WLAN) 204, and/or other interfaces 206 (which may not necessarily be wireless).

Referring to FIG. 2, the wireless WAN 202 may be implemented as a packet-based cellular or mobile network that includes a number of base stations 208 (one of which is shown in FIG. 2) where each of the base stations 208 provides wireless Radio Frequency (RF) coverage to a corresponding area or cell. The wireless WAN 202 is typically operated by a cellular network service provider that sells subscription packages to users of the wireless devices 102. The wireless WAN 202 comprises a number of different types of networks, for example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution), UMTS (Universal Mobile Telecommunications Systems), Third Generation Partnership Project (3GPP or 3G), or Evolution-Data Optimized (EV-DO).

As shown in FIG. 2, the communications system 200 also includes a wireless network gateway 210 and one or more network provider systems 212. The wireless network gateway 210 provides translation and routing services between the network provider system(s) 212 and the WAN 202, which facilitates communication between the wireless devices 102 and other devices (not shown) connected, directly or indirectly, to the network provider system 212.

The WLAN 204 comprises a network which in some examples conforms to IEEE 802.11 standards such as 802.11b, 802.11g, and/or 802.11n; however, other communications protocols may also be used for the WLAN 204. The WLAN 204 includes one or more wireless RF Access Points (AP) 214 (one of which is shown in FIG. 2) that collectively provide a WLAN coverage area. For the embodiment depicted in FIG. 2, the WLAN 204 is operated by an enterprise (for example, a business or university in a building or campus type environment) and the access points 214 are connected to an access point (AP) interface 216. The AP interface 216 provides translation and routing services between the access points 214 and the network provider system 212 to facilitate communication between two or more of the wireless devices 102 and other devices (e.g., such as desktop computers) connected, directly or indirectly, to the network provider system 212. The AP interface 216 is implemented using a computer, for example, a server running a suitable computer program or software.

According to one embodiment, the other interfaces 206 may be implemented using a physical interface indicated by reference 218. The physical interface 218 includes an Ethernet, Universal Serial Bus (USB), Firewire, or infrared (IR) connection implemented to exchange information between the network provider system 212 and the wireless device 102.

The network provider system 212 comprises a server or server modules or a number of servers or server modules which are typically located behind a firewall (not shown). The network provider system 212 may include a number of modules including a mobile data delivery module 220. Various modules running on the network provider system 212 may be implemented as a number of services running on a single server or as a number of interconnected servers each running a software program to implement the functionality of the respective module. The network provider system 212 provides access for the wireless devices 102, through either the wireless WAN 202, the WLAN 204, or the other connection 206 to the devices connected, for example, through an enterprise network 224 (e.g., an intranet), to the network provider system 212. In one embodiment, the data delivery module 220 is implemented on a computer, such as the network provider system 212.

The enterprise network 224 comprises a local area network, an intranet, the Internet, a direct connection, or combinations thereof. The enterprise network 224 may comprise an intranet for a corporation or other type of organization. In at least some embodiments, the network provider system 212 is part of the enterprise network 224, and is located behind a corporate firewall and connected to the wireless network gateway 210 through the Internet. A computer 222 (e.g., a desktop or laptop computer) assigned to the user of the wireless device 102 is typically connected to the enterprise network 224. As described earlier, the wireless device 102 may be temporarily and directly connected to the computer 222 using, for example, the serial port 152. This direct connection may make use of a cradle or docking station connected to a serial port of the computer 222, where the mobile device 102 is placed in the cradle, therefore completing the serial connection between the mobile device 102 and the computer 222. Alternatively, the wireless device 102 may communicate with the computer 222 using the communication subsystem 112 and the WAN 202 and/or the short-range communications subsystem 162 and the WLAN 204.

As shown in FIG. 2, an application/content server 227 may be connected to the enterprise network 224 and also to another network, for example, a Wide Area Network (WAN) 228. In some embodiments, an email server 226 and/or the content server 227 form part of the enterprise network 224. The WAN 228 may further connect to other networks. The WAN 228 may comprise or be configured with the Internet, a direct connection, a LAN, a wireless communication link, or any combination thereof. Content providers may provide content (information) via content servers, such as Web servers, connected to the WAN 228, an example of which is shown in FIG. 2 as content server 230 for recipes, advertisement server 232 for advertisements and an on-line store server 234 which may be configured for conducting e-commerce transactions. Persons of ordinary skill in the art will appreciate that additional infrastructure may be employed in addition to servers 230, 232 and 234 to provide their services and that FIG. 2 is simplified.

According to one embodiment, the mobile data delivery module 220 provides connectivity between the wireless WAN 202 and the WLAN 204 and the other connection 206 and devices and/or networks connected directly or indirectly to the network provider system 212. In one embodiment, the connectivity provided may be Hypertext Transfer Protocol (HTTP) based connectivity providing an Internet based service connection to devices connected to the wireless WAN 202, the WLAN 204, or the other connection 206 and devices and/or networks connected directly or indirectly to the network provider system 212. The network 224, the application/content server 227, the WAN 228, and the servers 230, 232, 234 are individually and/or collectively in various combinations a content source for the network provider system 212.

In the present embodiment, device 102 is further configured for short range communications such as Bluetooth communications and communications system 200 comprises at least one cooking appliance 260 that is also configured for short range communications such that appliance 260 and device 102 are capable of communicating with one another. Appliance 260 may comprise an agent (not shown) for reporting appliance data (e.g. real-time operation data such as timer, temperature and device status data) and, at least in some embodiments, receiving commands to control its operation (e.g. turn on/off, set time, set timer, set temperature, etc.). In another embodiment, (not shown), appliance 260 may be coupled via wireless or wired means to a local area network or wide area network (e.g. 228) (e.g. an Internet-enabled appliance). An agent on appliance 260 may be configured to receive requests for appliance data via the Internet and to receive commands via the Internet to configure operation of the appliance 260. Device 102 may therefor communicate with appliance 260 via network infrastructure 104.

It will be appreciated that the system shown in FIG. 2 comprises but one possible communication network or configuration of a multitude of possible configurations for use with the wireless devices 102.

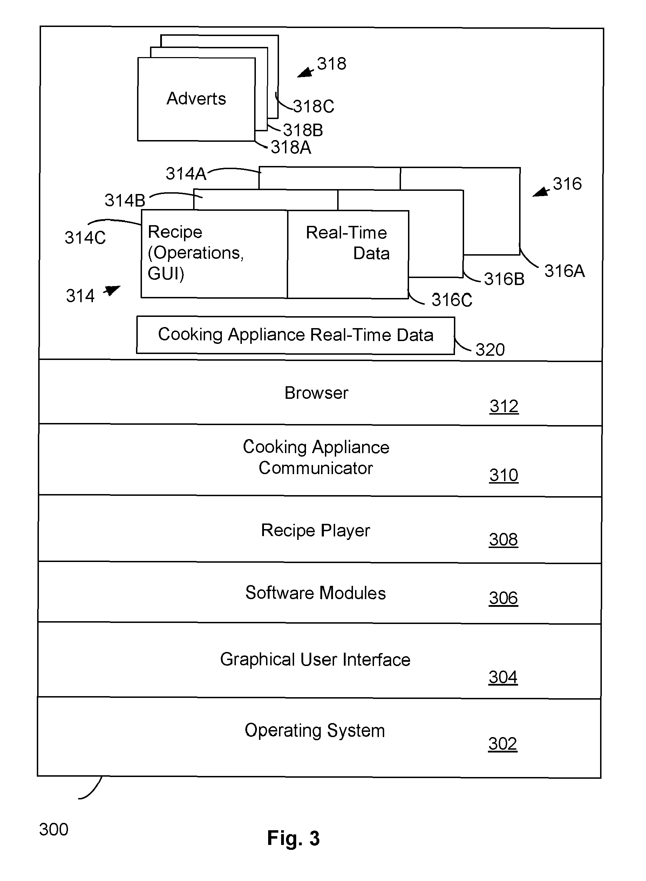

Reference is next made to FIG. 3, which shows a block diagram illustrating a memory 300 of the wireless device 102. The memory 300 stores various software components for controlling the wireless device 102. Memory 300 may comprise, for example, flash memory 144, RAM 146, ROM 148, memory module 130 and/or other device subsystems 164. In accordance with one embodiment, the wireless device 102 is intended to be a multi-tasking wireless communications device configured for sending and receiving data items and for making and receiving voice calls that also includes various applications enabling users to listen to music, watch video files, play games, view picture files, surf the Internet wirelessly, etc. To provide a user-friendly environment to control the operation of the wireless device 102, an operating system (OS) 302 resident on the wireless device 102 provides a basic set of operations for supporting various applications typically operable through a graphical user interface (GUI) 304. For example, the operating system 302 provides basic input/output system features to obtain input from the auxiliary I/O 150, the keypad 154, the clickable thumbwheel 160, and other input devices, and to facilitate output to the user via the display 142. The GUI 304 is typically a component of the operating system 302.

One or more software modules 306 for managing communications or providing a personal digital assistant (PDA) or other functions may also be included. The memory 300 also includes an email and calendar client, which may be combined in, for example, a PIM application having email-based calendaring and scheduling functions. Typically, the PIM is installed as one of the software modules 306.

The memory 300 also stores a mobile content player or recipe player 308, which may also be referred to as a content delivery module. In one example, the recipe player 308 may be integrated into the operating system 302. Alternatively, the module 308 may be a separate software component, as illustrated in FIG. 3. The recipe player 308 may be responsible for managing recipe and related content delivery from the perspective of the wireless device 102 and/or playing the content, which may include interactive components, on the wireless device 102. In the present context, content may comprise recipe data including a listing of ingredients and cooking instructions, advertisements, and other interactive data and/or instructions for configuring the operation of device 102 and in some embodiments, appliance 260. Memory 300 may further comprise a cooking appliance communicator module 310 for communicating with an agent of appliance 260, a browser module 312 for browsing the Internet, as well as various data or other content. For example, memory 300 may store one or more respective content packages (i.e. recipes) 314A - 314C, collectively 314 and, in some embodiments, real-time data therefor 316A-316C collectively 316. Real-time recipe data 316 may comprise respective cooking time remaining, current food temperature, etc. Memory 300 may store particular advertisements 318A-318C collectively 318 and cooking appliance real-time data 320. Real-time recipe data 316 may comprise instances of cooking appliance real-time data 320 generated by appliance 260 and/or data generated by device 102. Though not shown, recipe player may module 308 may store a content listing of recipes 314. Recipes may comprise respective manifests (e.g. XML documents) describing the content of a recipe (e.g. URLs for retrieval of the component content of a recipe package), received from content server 230. Operation of the mobile content player 308 will be described in more detail below.

Thus, the wireless device 102 includes computer executable programmed instructions for directing the wireless device 102 to implement various applications. The programmed instructions may be embodied in the one or more software modules 306 resident in the memory 300 of the wireless device 102. Alternatively, the programmed instructions may be tangibly embodied or stored on a computer readable medium (such as a DVD, CD, floppy disk or other storage media) which may be used for transporting the programmed instructions to the memory 300 of the wireless device 102. Alternatively, the programmed instructions may be embedded or carried in a computer-readable, signal-bearing medium that is uploaded to the wireless network 104 by a vendor or supplier of the programmed instructions, and this signal-bearing medium may be downloaded through one or more of the interfaces 112, 150, 152, 162 to the wireless device 102 from, for example, the wireless network 104 by end users.

Recipe content may be defined using an authoring system (not shown) which directly or indirectly makes the interactive recipes available (e.g. publishes the data) to content server 230. In some embodiments, the authoring system may be integrated into an application for document creation such as a presentation authoring application, such as, for example, Microsoft^{™} PowerPoint™, using an add-in application. In such embodiments, when the add-in is installed, a separate menu item can appear in the application's menus that provides the user with options for authoring, publishing and delivering the content. In some embodiments, content may be created in an application such as a slideshow or presentation application add-in and sent to a content authoring and publishing system (not shown) as described in a co-pending PCT patent application no. PCT/CA2008/002275 entitled "A Method and System for Authoring Mobile Content in a Slideshow or Presentation Application for Direct Delivery to a Mobile Device", which is hereby incorporated by reference in its entirety.

The authoring system may allow interactive components to be included in the content, such as clickable activities, radio boxes, text boxes or the like. An interactive component will generally have one or more associated attributes. In some embodiments, the attributes can include the location of an activation area and possibly one or more commands to be executed when the activation area is selected by a user. For example, the interactive component may be a clickable activity where the activation area is activated when the user 'clicks' on the activation area. For example, the activation area may include a telephone number and clicking on the activation area may execute commands to initiate a telephone call or an SMS message to be sent to the number indicated. The activation area may include a cooking appliance update (e.g. set oven to 400°F) and clicking on the activation area may execute commands to initiate the activity (e.g. via communicator module 310). If the activation area includes an email address, clicking on the activation area could allow the user to compose an email to be sent to that address. As another example, the activation area could include a Universal Resource Locator (URL) which invokes a web browser when the area is activated by the user. Further examples could include launching a video or audio player or mapping coordinates or addresses. Where interactive components have been included in the content, the authoring system may determine the location of an activation area of an interactive component and provide this information along with any other attributes, such as associated commands, to the content server.

In the present context, the content may assist a user of device 102 (e.g. a chef) through a recipe to prepare a dish using the cooking appliance 260. The content may be configured to guide the chef through particular cooking operations, receiving inputs from or communicating inputs to the cooking appliance 260, etc. Interactive areas may be configured to operate device 102 to communicate with appliance 260 to query the appliance 260 for real-time appliance data 320 to be stored in memory 300 and/or to provide commands to operate the appliance remotely (e.g. "set oven temperature to 400°F"). Interactive areas may be configured to time certain cooking operations. For example, recipe instructions "stir for 10 minutes" may be accompanied with an interactive area to start a timer for 10:00 minutes. In some embodiments, the interactive areas may be configured to prompt the chef to manually perform cooking operations, for example, where device 102 and a cooking appliance (e.g. a hand mixer) are not configured to communicate.

As noted, the recipe player 308 may be programmed to render various content types on the mobile device. The recipe player 308 may also be programmed to render the interactive components, for example, by rendering an activation area on the visual representation of the content based on a location attribute determined previously and received as part of the content package. The recipe player 308 may be programmed to detect when an activation area has been selected (e.g. clicked on) by a user of the wireless device and to execute any associated commands. In association with the cooking assistance operations, recipe player 308 may be configured to present advertisements 318. Advertisements may comprise various content types, such as, text, images, video, URLs (e.g. to invoke browser 312), contact information and commands to invoke voice or data communication applications (e.g. PIM modules 306) such as telephone number, email address, etc.

The device 102 may be configured to provide timely and context sensitive advertisements. Advertisements may be obtained from advertisement server 232. For example, the recipe player may be configured to provide a step by step guide to cooking the dish (or dishes) of the recipe, monitoring progress (e.g. monitoring cooking time, oven temperature, cooking temperature). Progress may be monitored in response to inputs, whether user inputs or inputs from the cooking appliance or in response to operations of the device 102 (e.g. a timer or alarm executing on the device). Device 102 may be configured to provide suggestions (for example, advertisements) complementary to the meal being prepared. The advertisements may be displayed when a user is likely using the device and viewing the display. The advertisements may be displayed when progressing from one step to another, responding to a progress prompt (e.g. timer alarm), in response to input from the user (e.g. in an interactive area), when reporting (signaling) cooking appliance data 320 to the user, particularly new or updated data (e.g. oven at desired temperature).

In one embodiment, the advertisement suggests one or more wines that may complement the meal. The recipe (e.g. ingredients, food type, associated country or region of the dish, etc.) may be used as a basis for recommending, a wine or wines. Advertisement server 232 and/or content server 230 or another server (not shown) may be configured with a recommendation engine to receive the recipe (or selected data thereof) from which to generate the recommendation. The device may be configured to search a local store or stores, (for example via on-line store server 234) for a matching wine in stock, and provide notification of the wine's availability. Device 102, may also send a request to the store server 234 to reserve the wine and/or purchase and hold the wine for pickup or delivery. Searching, reserving and optionally purchasing may be conducted via browser 312. In some embodiments, device 102 may be configured to prompt a user to contact the store using a telephone application of the device.

In some embodiments, the advertisement may include a suggested accompanying dish. The dish may be offered for purchase, for example, for pick up or delivery from a service such as a restaurant/catering company or other service offering tack-out or delivery of prepared foods. The device may send a request to a server such as server 234 to purchase the accompanying dish. Searching, reserving and optionally purchasing may be conducted via browser 312. In some embodiments, device 102 may be configured to prompt a user to contact the take-out or delivery service using a telephone application of the device. In an embodiment, the advertisement may comprise a replacement dish rather than an accompanying dish per se, For example, up detection or signaling of a failure to successfully complete the recipe, possibly because the recipe was not followed (e.g. the dish was not removed from the oven after an appropriate time or too soon), upon a monitoring of food temperature exceeding a threshold, upon user input indicating failure, etc, the device may present a advertisement to purchase the replacement dish or a similar dish to the dish of the recipe from a take-out or delivery service as described. The device may determine the failure in response to cooking data generated by the cooking appliance.

Other advertisements may suggest complimentary recipes (e.g. for downloading from server 230), cooking utensils, appliances, serving dishes, dinner party products such as flowers, table decorations, etc. for purchase from store 234, etc.

Thus in a system 200, device 102 may be perceived as a hub between cooking appliance 260 (or other appliances) and services on an external network such as offered by servers 230, 234 and 236. The device may utilize opportunities occasioned during the making of the recipe, using data events occasioned by the cooking appliance and other recipe monitoring progression, which focus a user's attention to device 102, as trigger points to present content including contextual content. Contextual content, including recommendations, etc. determined in response to a current recipe (or recipe history or other data), may be presented via the device at such times to enhance reception.

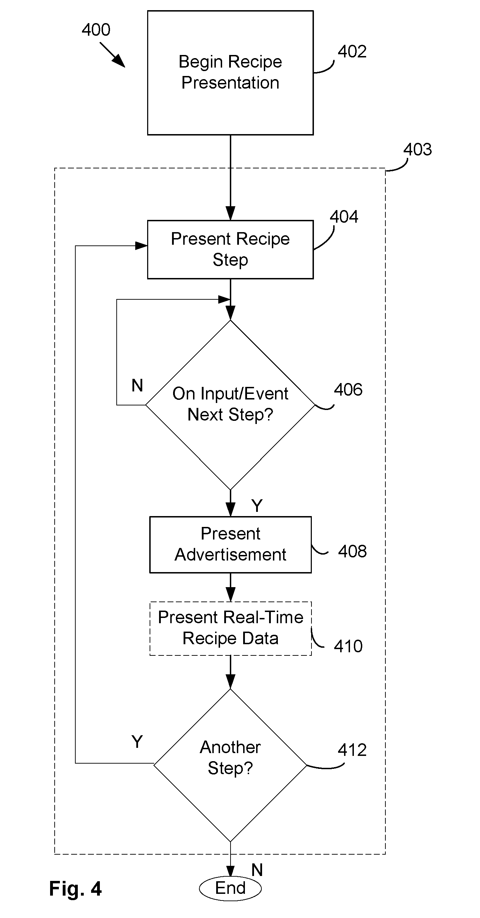

With reference to FIG. 4, there is shown a flow chart of operations 400 for device 102, for presenting content, namely a recipe, monitoring progress of recipe steps and while monitoring, presenting at least one advertisement in accordance with one embodiment. At block 402, device 102 begins presentation of a recipe e.g. 314A. Such may be invoked in response to user input to start player 308 and the selection of recipe 314A. Recipe 314A may be previously received from server 230 (not shown). In another embodiment, also not shown, a user may browse a list of available recipes for downloading and download a recipe (e.g. via content server 230) using the player 308 or browser 312, etc.

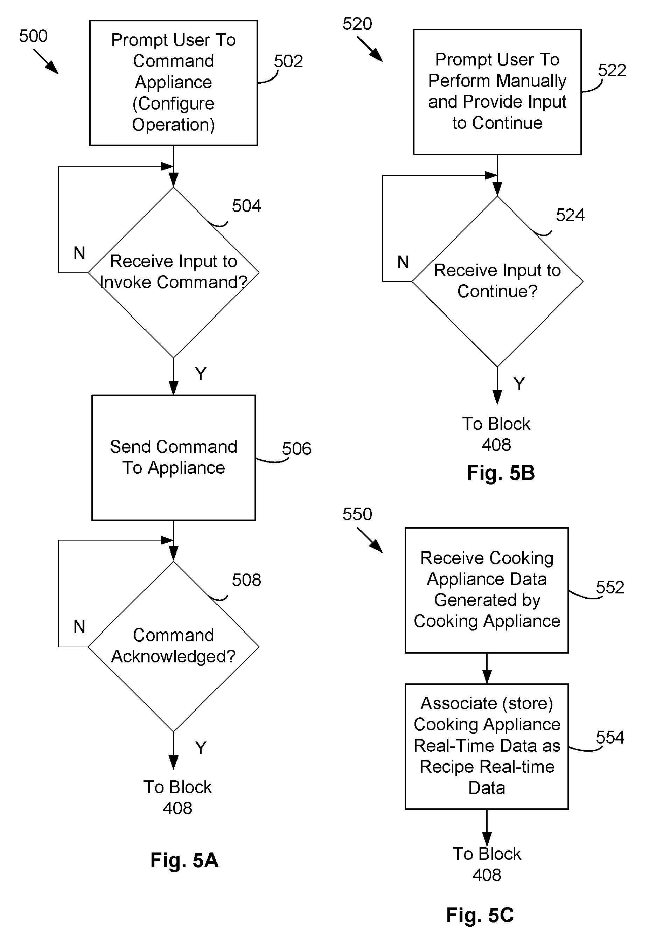

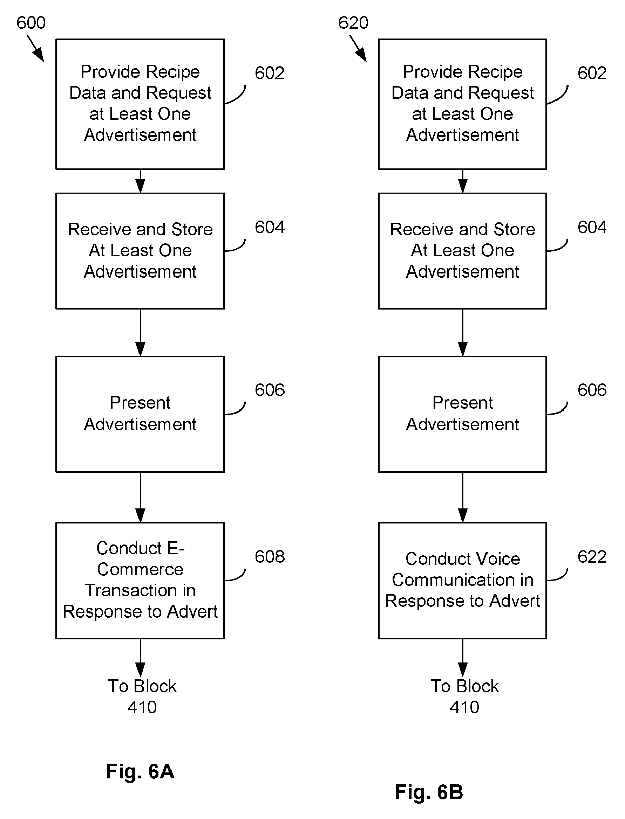

Generally denoted by reference 403, player 308 operates to monitor the progress of the completion of the recipe and while monitoring, present at least one advertisement. At block 404 a recipe step is presented. In the present embodiment, a transition or progression to a next step (via Y branch to block 408) is triggered by receiving certain input or upon the occurrence of another triggering event (block 406). FIGS. 5A, 5B and 5C describe such operations in more detail. Such operations may include the configuration of the operation of appliance 260. Waiting for the input or event trigger is depicted via N branch to block 406. At block 408, at least in some occurrences, one or more of the advertisements 318 is presented via device 102. FIGS. 6A and 6B describe such operations in more detail. Optionally, at block 410, real-time recipe data 316 may be presented. The data may comprise a cooking temperature, food temperature, cooking time remaining, etc. Typically such data is received from communications with appliance 260. At block 412, a determination is made whether a next step is to be presented and operations may repeat via Y branch to block 404 or terminate via N branch.

It is understood that an advertisement need not be presented when transitioning between or with every recipe step so as to avoid user fatigue or so as to not disrupt time sensitive progression for certain steps. It is also understood that the presentation of a particular advertisement may be in association with the presentation of a recipe step; that is, contemporaneously on device 102 (player 308) as it presents a next recipe step. For example, a portion of display 142 may be reserved to present an advertisement (e.g. "click here for wine recommendations") while another portion may present the recipe. Though no advertisement presentation is shown in association with the first recipe step presentation, such may be occasioned. It is understood that a particular advertisement (e.g. 318B) may be presented more than once as the recipe is performed. It may be preferred that some advertisements (e.g. interactive advertisements, e-commerce transactions etc.) that invite significant user attention and time away from the completion of a recipe step may be presented only when the recipe may tolerate delays in the performance/completion of a particular step.

With reference to FIGS. 5A-5C, there is shown flow charts of operations 500, 520 and 550 illustrating aspects of operations 400 in greater detail and in accordance with certain embodiments thereof. In some embodiments, the transition to a next step may be occasioned upon receiving input from appliance 260. For example, the first recipe step may comprise "preheat oven to 375°F". A user may be prompted (block 502) to click an interactive area of the content presented or press a particularly button to send a command (block 506) to appliance 260 to turn on and set the temperature. In response, device 102 may receive an acknowledgment (block 508) from appliance 260. This input/event may trigger a transition to a next step via Y branch to branch 408. In some embodiments for some recipe steps (not illustrated), the user may not be prompted to invoke the command. In other embodiments, receipt of input from the appliance may not be directly in response to a command. Device 102 may be configured to query or command appliance 260 without user input. Appliance 260 may report real-time data 320 (e.g. over temperature, food temperature, time remaining on a timer, oven failure, etc,) through unilateral action. See operations 550 in FIG. 5C. At block 552, cooking appliance real-time data 320 is received that is generated by appliance 260. This may be initial data or updated data (e.g. to capture changes over time). At block 554, the data 320 may be associated with a particular recipe e.g. as some of data 316. Cooking appliance real-time data or commands may be communicated to or from device 102 via communicator module 310, browser 312 or player 308 for example.

In another embodiment of operations 520 depicted in FIG. 5B, the user may be prompted (block 522) to manually perform recipe step operation such as to operate the appliance 260 manually (e.g. to set the temperature) and click an area of display 142 or a button of the device to continue. Receipt of the user's input (block 524) may trigger the next recipe step via Y branch to step 408. Other prompted manual operations may include measuring or preparing ingredients, taking a temperature/checking doneness, etc. Other trigger events may be envisioned. For example, a recipe step of "bake 1 hour" may invoke a timer/alarm setting on device 102. The passage of 1 hour may trigger a notification via device 102 (audible, visual, tactile notification). A user's response to the alarm may trigger a transition to a next recipe step and an advertisement presentation opportunity. The next step might be a confirmation that the baking is complete and, if not, the resetting of an alarm to bake for extra minutes (not shown).

In another embodiment, on initiating the recipe operations 400, device 102 may communicate a temperature set command to the appliance 260 with any additional user input as described. Device 102 may do throughout the recipe. As temperature changes are required, device 102 may alter that cooking parameter automatically. Some recipes may require cooking at Temp A for x time and then changing to Temp B for y time and device 102 may operate accordingly. With reference to FIG. 5A, it may be that device 102 performs operations 506 and 508 without performing operations 502 and 504 for this recipe step. In a further alternative, it may be that device 102 is configured to omit presenting the recipe step 404 and advertisement 408 during such automatic operation.

In a further embodiment, user actions may be inferred (or abstracted) from certain (inputs) data received at the device 102. For example, when an oven door of appliance 260 is opened, the oven temperature may drop significantly and quickly. If such a drop is noted and communicated by the appliance 260 to the device 102 at a point in the recipe process (e.g., expiration of cooking time) the device may treat the coincident occurrence of these events as indicating that the food was removed from the oven. As a result, the device may prompt a user to confirm the inferred event and turn off the oven. Alternately, the device may turn off (or turn down the temperature) the oven if it remains on for an extended period of time (e.g. after expiry of the expected total cooking time). The device may also alter certain parameters of the recipe if it receives communications from the appliance indicative of a user straying from the specified recipe order. For example, if the appliance communicates to the device the occurrence of several events indicative of a user opening the oven door, the device may adjust the oven cooking time to compensate for those temperature drops. Operations 403 may be adapted accordingly for such user action inferences.

With reference to FIG. 6A there is shown a flow chart of operations 600 representing the presentation of an advertisement, particularly a contextual advertisement, via player 308 and represented as block 408 of FIG. 4 and in accordance with one embodiment. It will be understood that certain of operations 600 may be performed prior to or contemporaneous with operations 404 and 406 for example. At block 602 recipe data and a request to receive at least one advertisement is provided by device 102 to a server such as advertisement server 232. The recipe data may comprise ingredients, dish name, descriptive data such as food style, characteristics, country or region etc. In another embodiment the recipe data may be a reference useful to identify the recipe to the server, which details may be retrieved using the reference (e.g. from server 230). At block 604, at least one or more advertisements 318 are received in response to the request. The advertisements 318 may be stored in memory 300. The advertisements may comprise more than one content file, a URL or XML document, etc. for interpretation and/or rendering by player 308. At block 606, an advertisement is presented. The presentation may comprise rendering the content on a portion of the display 142. At block 608, an e-commerce transaction is conducted in response to the advertisement. As described earlier, the transaction may comprise an engagement with store server 234, such as to search for, reserve and/or purchase a product. A person of skill in the art will appreciate that the operations of blocks 602 and 604 may be performed in a background mode or before the operations 404 or 406 to prefetch advertisements. Operations 608 may be conducted via browser 312. These operations 608 may be conducted contemporaneously with other of operations 400 (i.e. operations 608 need not conclude before operations 410 etc. are commenced and/or performed). Thus even though operations 400 and 600 are generally linear and consecutive in depiction, they need not be in real-time.

FIG. 6B shows operations 620 for the presentation of an advertisement, particularly a contextual advertisement, via player 308 and represented as block 408 of FIG. 4 and in accordance with one embodiment. Operations at blocks 602, 604 and 606 of operations 620 are generally the same as for operations 600. The advertisement received may be different and thus details of the presentation of the advertisement may differ. At block 622, device 102 may be invoked to conduct a voice communication, for example, to call a store to order a product. These operations 622 may be conducted contemporaneously with other of operations 400 (i.e. operations 622 need not conclude before operations 410 etc. are commenced and/or performed). Thus even though operations 400 and 620 are generally linear and consecutive in depiction, they need not be in real-time.

In a further embodiment, appliance 260 may comprise a communication device coupled for communication with servers 230, 232 and 234, whether directly or indirectly. For example, appliance 260 may be configured for wired or wireless communication to WAN 228 (not shown). Appliance 260 may be configured to present a recipe and advertisements as described but with appropriate modifications, such that wireless device 102 and infrastructure therefor (e.g. 104, 220) is not included in system 200. Appliance 260 may comprise a display screen and/or other user interface components to communicate with a user and receive inputs. Appliance 260 may communicate to receive a recipe and present same to a user. Appliance 260 may essentially configure itself via operations 500, for example.

Operations described with reference to FIGS. 4, 5A, 5B, 5C, 6A and 6B may not be performed in the specific order shown in the drawings. A person of ordinary skill in the art will appreciate that operations may be performed in a different order, contemporaneously or not at all for certain recipes or recipe steps.

It is also understood that in some embodiments, the wireless device 102 may be replaced with another communication device, such as a home computer (laptop or personal computer etc.) or even another web-enabled appliance such as a smart refrigerator, that is in communication with a cooking appliance 260 as well as servers 230-234 such as via WAN 228.

The embodiments of the present disclosure described above are intended to be examples only. Those of skill in the art may effect alterations, modifications and variations to the particular embodiments without departing from the intended scope of the present disclosure. In particular, selected features from one or more of the above-described embodiments may be combined to create alternative embodiments not explicitly described, features suitable for such combinations being readily apparent to persons skilled in the art. The subject matter described herein in the recited claims intends to cover and embrace all suitable changes in technology.

## Claims

1. A computer implemented method for operating a cooking appliance (260) to prepare a dish in accordance with a recipe, the method performed by a communication device (102, 260) and comprising:
presenting a recipe (314) directing the preparation of a dish in recipe steps (403);
configuring an operation of the cooking appliance in communication with the communication device (500) in accordance with at least one of the recipe steps;
monitoring a progress of the recipe steps (406); and
presenting one or more advertisements in response to the progress (408).

2. The method of claim 1 wherein the step of monitoring comprises receiving input (504, 524, 552) indicating the progress and wherein said presenting one or more advertisements is responsive to the input.

3. The method of claim 2 wherein the input comprises real-time recipe data (550) generated by the cooking appliance (260).

4. The method of claim 3 comprising presenting real-time recipe data (410).

5. The method of any one of claims 1 to 4 wherein the advertisement (318) is a contextual advertisement selected for presentation (602) in response to recipe data (314) associated with the recipe.

6. The method of any one of claims 1 to 5 wherein the advertisement is presented for interaction, configured to be responsive to input to invoke a function of said communication device (600, 620).

7. The method of claim 6 comprising receiving input responsive to said advertisement and invoking a communication function of said communication device (608, 622).

8. The method of claim 7 comprising conducting an e-commerce transaction in response to said input (622).

9. The method of any one of claims 1 to 8 wherein said presenting of the recipe prompts a user for manual operation (520) and to provide input to continue and further wherein said monitoring is responsive to said input to continue (524).

10. The method of any one of claims 1 to 9 wherein the step of monitoring comprises automatically configuring an operation of a cooking appliance.

11. The method of any one of claims 1 to 10 wherein the step of monitoring comprises inferring progress of said recipe steps in response to cooking data generated by the cooking appliance.

12. The method of any one of claims 1 to 11 wherein the communication device comprises a wireless communication device (102), wherein the wireless device is coupled for communication with at least one cooking appliance (260).

13. A communication device comprising a processor (140) and a memory (144, 146, 148, 300) coupled thereto and a communication sub-system (112, 162, 180), coupled to the processor, for communicating with a cooking appliance (260) for controlling the operation of the appliance and with a content server (230) to receive recipes (314), said memory storing instructions and data for execution by the processor to configure the communication device to perform a method in accordance with any one of claims 1 to 12.

14. A computer program product comprising a memory storing instructions and data to configure a processor of a communication device to perform a method in accordance with any one of claims 1 to 12.

## Amended claims

### Amended claims in accordance with Rule 137(2) EPC.

**1.** A computer implemented method for operating a cooking appliance (260) to prepare a dish in accordance with a recipe, the method performed by a communication device (102, 260) and comprising:
presenting a recipe (314) directing the preparation of a dish in recipe steps (403);
configuring an operation of the cooking appliance in communication with the communication device (500) in accordance with at least one of the recipe steps;
monitoring a progress of the recipe steps (406);
in response to the progress of the recipe steps, obtaining one or more advertisements from an advertisement server (232);_and
presenting one or more advertisements on the communication device during the progress (408).

**2.** The method of claim 1 wherein the step of monitoring comprises receiving input (504, 524, 552) indicating the progress and wherein said presenting one or more advertisements is responsive to the input.

**3.** The method of claim 2 wherein the input comprises real-time recipe data (550) generated by the cooking appliance (260).

**4.** The method of claim 3 comprising presenting real-time recipe data (410).

**5.** The method of any one of claims 1 to 4 wherein the advertisement (318) is a contextual advertisement selected for presentation (602) in response to recipe data (314) associated with the recipe.

**6.** The method of any one of claims 1 to 5 wherein the advertisement is presented for interaction, configured to be responsive to input to invoke a function of said communication device (600, 620).

**7.** The method of claim 6 comprising receiving input responsive to said advertisement and invoking a communication function of said communication device (608, 622).

**8.** The method of claim 7 comprising conducting an e-commerce transaction in response to said input (622).

**9.** The method of any one of claims 1 to 8 wherein said presenting of the recipe prompts a user for manual operation (520) and to provide input to continue and further wherein said monitoring is responsive to said input to continue (524).

**10.** The method of any one of claims 1 to 9 wherein the step of monitoring comprises automatically configuring an operation of a cooking appliance.

**11.** The method of any one of claims 1 to 10 wherein the step of monitoring comprises inferring progress of said recipe steps in response to cooking data generated by the cooking appliance.

**12.** The method of any one of claims 1 to 11 wherein the communication device comprises a wireless communication device (102), wherein the wireless device is coupled for communication with at least one cooking appliance (260).

**13.** A communication device comprising a processor (140) and a memory (144, 146, 148, 300) coupled thereto and a communication sub-system (112, 162, 180), coupled to the processor, for communicating with a cooking appliance (260) for controlling the operation of the appliance and with a content server (230) to receive recipes (314), said memory storing instructions and data for execution by the processor to configure the communication device to perform a method in accordance with any one of claims 1 to 12.

**14.** A computer program product comprising a memory storing instructions and data to configure a processor of a communication device to perform a method in accordance with any one of claims 1 to 12.
